# EUROPEAN PATENT SPECIFICATION

(11) **EP 1 324 269 B1**
(45) Date of publication and mention of the grant of the patent: **25.01.2017**
(21) Application number: 01974693.2
(22) Date of filing: 04.10.2001
(51) Int. Cl.: G06F 3/00, G06T 7/20, H04N 7/18

(54) **IMAGE PROCESSING APPARATUS, IMAGE PROCESSING METHOD, RECORD MEDIUM, COMPUTER PROGRAM, AND SEMICONDUCTOR DEVICE**
BILDVERARBEITUNGSGERÄT, -METHODE, AUFNAHMEMEDIUM, COMPUTERPROGRAMM UND HALBLEITERBAUELEMENT
APPAREIL ET PROCÉDÉ DE TRAITEMENT D'IMAGE, SUPPORT D'ENREGISTREMENT, PROGRAMME INFORMATIQUE ET DISPOSITIF A SEMICONDUCTEURS

(30) Priority: 06.10.2000 JP 2000307574; 26.09.2001 JP 2001295098
(43) Date of publication of application: 02.07.2003
(73) Proprietor: Sony Interactive Entertainment Inc., Tokyo 108-0075 (JP)
(72) Inventor: OHBA, Akio, c/o SONY COMPUTER ENTERTAINMENT INC., Tokyo 107-0052 (JP)
(74) Representative: Manitz, Finsterwald & Partner GbR
(86) International application number: PCT/JP2001/008762
(87) International publication number: WO 2002/031773

(56) References cited:
- WO-A1-99/19788
- WO-A1-99/65014
- JP-A- 6 153 017
- JP-A- 7 281 666
- US-A- 5 594 469
- US-A- 5 732 227

## Description

### Technical Field

The present invention relates to an image processing technology for making use of images that have been taken by an image pickup apparatus such as a video camera as an input interface for commands and others. Relevant technologies are disclosed in JP-A-6 15301731, JP-A-7 281 666 27 and US-A-5 594 469.

### Background Art

Keyboards, mouses, and controllers are often used as input devices for computers, video game machines, and others. An operator enters a desired command or commands by means of manipulating an input device that causes a computer to execute processing according to the command(s) entered. Then, the operator sees images and/or listens to sounds obtained as processing results through a display device and/or a speaker.

The operator enters commands by operating many buttons or keys provided on the input device while watching a cursor shown on a display device.

Such operations greatly depend on operating experiences of the operator. For example, for those who have never touched a keyboard before, entering a desired command using a keyboard is quite troublesome and time-consuming, and they are prone to input errors due to mistaken keystrokes. For this reason, there is a demand for a man-machine interface that allows easy operation by an operator.

On the other hand, with the progress of multimedia technologies, people in general households can now readily enjoy transferring images taken with a video camera into a computer or others, editing and displaying them on a display device. Such technologies are also used for personal authentication by analyzing picked-up images of a physical body such as a face, extracting characteristic features thereof to identify the individual.

Conventionally, such images taken are used as information that is to be processed by a computer for editing or analysis. However, images taken have not been used so far for a purpose to enter commands to a computer.

It is an object of the present invention to provide an image processing technology to use images that have been taken by an image pickup apparatus or others as an input interface that allows a user to enter commands.

### Disclosure of Invention

The apparatus, method, computer program and computer-readable recording medium of the present invention are defined in the independent claims.

### Brief Description of Drawings

FIG. 1 is an overall configuration diagram of an image processing system to which the present invention is applied;
FIG. 2 is a configuration diagram of an image processor according to an embodiment of the present invention;

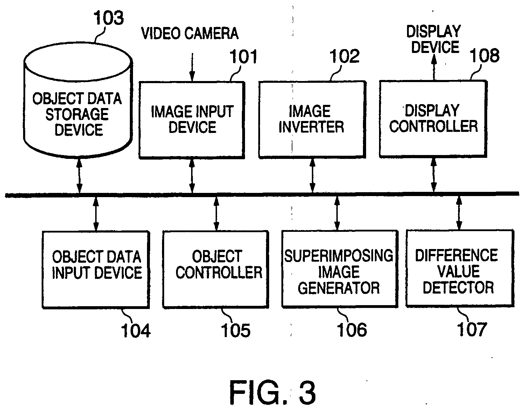

FIG. 3 is a functional block diagram of the image processor according to the embodiment of the present invention;
FIG. 4 is a flow chart showing a processing procedure of Embodiment 1;
FIG. 5 is a flow chart showing a processing procedure of Embodiment 1;
FIG. 6 illustrates a combined image according to Embodiment 1;
FIG. 7 illustrates a menu image;
FIG. 8 is a flow chart showing a processing procedure of Embodiment 2;
FIG. 9 illustrates a combined image according to Embodiment 2;
FIG. 10 is a view for use in describing how drawing is made using recursive texture;
FIG. 11 is a flow chart showing a processing procedure of Embodiment 3;
FIG. 12 is a flow chart showing a processing procedure of Embodiment 3; and
FIG. 13 illustrates a combined image according to Embodiment 3.

### Best Mode for Carrying Our the Invention

An embodiment of the present invention is specifically described with reference to the accompanying drawings.

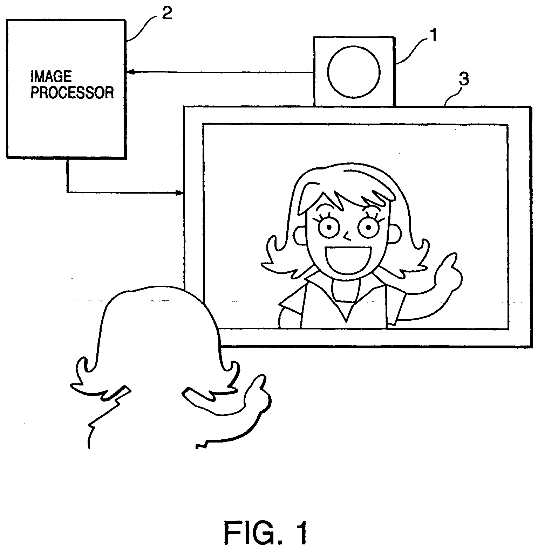

FIG. 1 is a view showing a configuration example of an image processing system to which the present invention is applied.

This image processing system takes pictures of an operator sitting in front of a display device 3 using an analog or digital camcoder 1, captures so-obtained moving images into an image processor 2 consecutively on the time series to generate mirrored moving images, and combines an object image representing an object such as a menu and a cursor with a portion of the mirrored moving image where a remarked object such as an eye or a hand of the operator (hereinafter, the remarked object is referred to as a "target") is positioned, to generate a combined image (this, too, becomes a moving image) and displays the combined image on the display device 3 in real time.

A mirrored moving image can be generated by mirroring (right/left inversion of image) by the image processor 2 the moving image captured by the camcoder 1. Alternatively, a mirror may be placed in front of the camcoder 1, and a picture of a moving image on the mirror surface reflecting the operator may be taken by the camcoder 1 to form a mirrored moving image. In any case, a combined image of which display mode vary in real time according to the movement of the target is displayed on the display device 3.

The image processor 2 is implemented by a computer that provides required functions using a computer program.

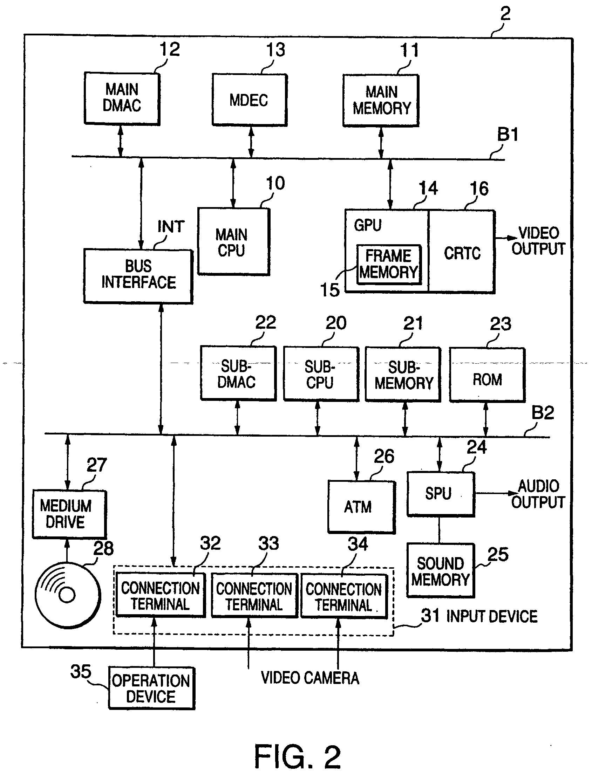

As a hardware configuration is shown by way of example in FIG. 2, the computer of this embodiment has two buses, a main bus B1 and a sub bus B2 to which a plurality of semiconductor devices each having specific functions are connected. These buses B1 and B2 are connected to and disconnected from each other through a bus interface INT.

The main bus B1 is connected to a main CPU 10 which is a main semiconductor device, a main memory 11 that is constituted of a RAM, a main DMAC (Direct Memory Access Controller) 12, an MPEG (Moving Picture Experts Group) decoder (MDEC) 13 and a graphic processing unit (hereinafter, referred to as "GPU") 14 including a frame memory 15 which serves as a drawing memory. The GPU 14 is connected to a CRTC (CRT Controller) 16 for generating a video signal to allow the data in the frame memory 15 to be displayed on the display device 3.

Upon activation of a computer, the main CPU 10 reads a bootstrap program from a ROM 23 on the sub bus B2 through the bus interface INT and runs the bootstrap program to start an operating system. It also controls a media drive 27, reads an application program and data from a medium 28 loaded in this media drive 27 and stores them in the main memory 11. The main CPU 10 further performs geometry processing (coordinate value calculation processing), which is a matter of setting up shapes and motion of the associated objects, for various data read from the medium 28, for example, three-dimensional object data (coordinate values of the vertices (representative points) of a polygon, etc.) made up of a plurality of basic graphics (polygons) and generates a display list containing geometry-processed polygon definition information (specifications of the shape of a polygon used, its drawing position, type, color or texture, etc. of the components of the polygon).

The GPU 14 is a semiconductor device that holds drawing context (drawing data including polygon components). It has the functions of reading a necessary drawing context according to the display list sent from the main CPU 10 to perform rendering processing (drawing processing) and drawing polygons on the frame memory 15. Since the frame memory 15 can also be used as a texture memory, any pixel image stored on the frame memory can be pasted as a texture on the polygon to be drawn.

The main DMAC 12 is a semiconductor device that controls not only DMA transfer to each circuit connected to the main bus B1, but also DMA transfer to each circuit connected to the sub bus B2 according to the condition of the bus interface INT. The MDEC 13 is a semiconductor device that operates in parallel with the main CPU 10 to decompress data compressed, for example, in MPEG (Moving Picture Experts Group) or JPEG (Joint Photographic Experts Group) format.

The sub bus B2 is connected to a sub CPU 20 including a microprocessor, a sub memory 21 formed of a RAM, a sub DMAC 22, the ROM 23 on which control programs such as an operating system are stored, a sound processing semiconductor device (SPU: Sound Processing Unit) 24 that reads sound data stored in a sound memory 25 and produces the same as an audio output, a communication control unit (ATM) 26 that transmits/receives information to/from an external device via a network (not shown), the media derive 27 into which the medium 28 such as a CD-ROM and a DVD-ROM is loaded, and an input device 31.

The sub CPU 20 controls various operations according to the control program stored in the ROM 23. The sub DMAC 22 is a semiconductor device that controls operations such as DMA transfer to each circuit connected to the sub bus B2 only when the bus interface INT disconnects the main bus B1 from sub bus B2. The input unit 31 comprises a connection terminal 32 through which an input signal from an operating device 35 is received, a connection terminal 33 through which an image signal from a camcoder 1 is received, and a connection terminal 34 through which a sound signal from the camcoder 1 is received.

It should be noted that description in this specification is made only about the images, and not about sound, for convenience.

In the computer having the above-mentioned configuration, the main CPU 10, the sub CPU 20 and the GPU 14 read and execute a predetermined computer program stored in the recording medium such as the ROM 23 and the medium 28 to form functional blocks that are required for operating as the image processor 2: an image input device 101, an image inverter 102, an object data storage device 103, an object data input device 104, an object controller 105, a superimposing image generator 106, a difference value detector 107 and a display controller 108. In the relationship with the hardware shown in FIG. 1, the image input device 101 is formed of the input device 31 and the sub CPU 20 that controls the operation thereof. The image inverter 102, the object data input device 104, the object controller 105 and the difference value detector 107 are formed of the main CPU 10. The superimposing image generator 106 is formed of the GPU 14. The display controller 108 is formed of the GPU 14 and CRTC 16 that are cooperating with each other. The object data storage device 103 is formed in a memory area, such as the main memory 11, that is accessible to the main CPU 10.

The image input device 101 receives images taken by the camcoder 1 via the connection terminal 33 of the input device 31. In the case where the incoming image is a digital image, the image input device 101 receives the image as is. In the case where the incoming image is an analog image, the image input device 101 receives the image after A/D conversion of it.

The image inverter 102 performs mirroring processing, that is, right/left inversion on the image received by the image input device 101, to form a mirrored moving image.

The object data storage device 103 holds object data together with identification data thereof, the object data being for creating an object such as a menu (including a submenu), a matchstick, or a cursor.

The object data input device 104 receives necessary object data from the object data storage device 103 and sends them to the object controller 105. The object data to be received is instructed by the object controller 105.

The object controller 105 generates an object image based on the object data incorporated from the object data input device 104 according to the instruction. In particular, the object controller 105 determines display conditions for a given object based on a difference value sent from the difference value detector 107 and generates an object image to realize the display conditions. The difference value will be described later.

The superimposing image generator 106 draws a combined image in the frame memory 15, the combined image being obtained by superimposing the mirrored moving image supplied from the image inverter 102 on the object image generated by the object controller 105.

It should be noted that an object image may be displayed on a mirrored moving image by means of impose processing rather than superimpose processing of the object image to create a combined image.

The difference value detector 107 compares, on a frame by frame basis, an image feature of the mirrored moving image of the combined image generated by the superimposing image generator 106 and derives a difference value of the image features between the mirrored moving images of the preceding and following frames. Furthermore, the difference value detector 107 generates a difference image between the mirrored moving images of the preceding and following frames as required.

The difference value of the image features is a value that quantitatively represents a variation per frame of the movement component of the target included in the mirrored moving image. For example, the difference value indicates a distance that the target has moved in the mirrored moving image or an area between the area after the movement and the area before the movement.

When a plurality of targets are included within one mirrored moving image, difference values of the image features represent variations in movement of the individual targets. Therefore, it is possible to quantitatively calculate a variation in movement of each target by means of calculating this difference value.

The difference image is an image that represents a variation in movement per frame of each target included in the mirrored moving image at a given point of time. For example, when a position of a target moves between two mirrored moving images, the difference image is an image made up of the image of the target before the movement and the image of the target after the movement.

In order to obtain the difference value and the difference image, the difference value detector 107 stores in the main memory 11 a certain mirrored moving image as a "reference image" relative to mirrored moving images of other frames. The mirrored moving image to be stored may be a whole mirrored moving image for one frame. Alternatively, it may be a mirrored moving image that is only a part of the target because all that is required is to make it possible to obtain a difference value in the image features.

In the following description, whenever a distinction should be made between a area of the target and the rest area of image, such a area of the target is called "template image".

The difference value detected by the difference value detector 107 is sent to the object controller 105 and used to control movements of object images.

The display controller 108 converts the combined image generated by the superimposing image generator 106 to a video signal and supplies it to the display device 3. The display device 3 displays the combined image (moving image) on a screen using this video signal.

### <Image processing method>

Next, an embodiment of the image processing method carried out using the above-mentioned image processing system is described.

### [Embodiment 1]

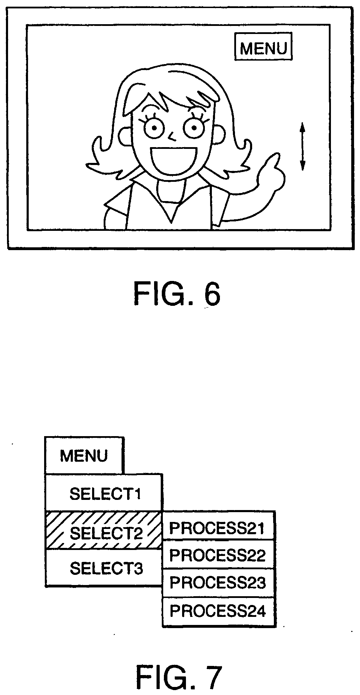

It is assumed that the image processor 2 produces on the display device 3 a combined image consisting of a mirrored moving image of an operator which was taken by the camcoder 1 and which was subjected to mirroring, with a menu image as an example of an object image superimposed, as shown in FIG. 6.

As a target, it is possible to choose any one of various objects such as eyes, mouth, and hands of the operator. Here, description is made in conjunction with a case, in the combined image, where the operator's hand corresponds to the target and instructions are designated with the menu image by detecting the amount of movement of the hand in the area in which the menu image is displayed.

The menu image has a hierarchic structure as shown in FIG. 7. When the operator selects "menu" at the top layer, a pull-down image highlighting one of "select1", "select2" or "select3" at the lower layer is displayed. When one item is selected from the pull-down menu, the process determining image (for example, "process 21", "process 22", "process 23", "process 24") of the menu at the lower layer of the selected pull-down image is displayed.

The process determining image is stored in the object data storage device 103 such that it is associated with a program to make the main CPU 10 execute a determined process (event). When a certain process determining image is selected, the program associated thereto is run to execute the corresponding process (event).

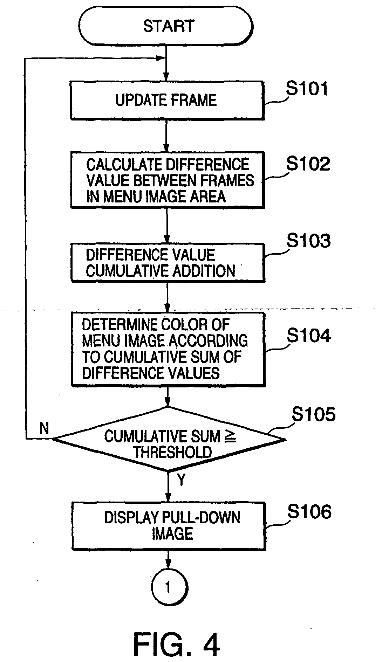

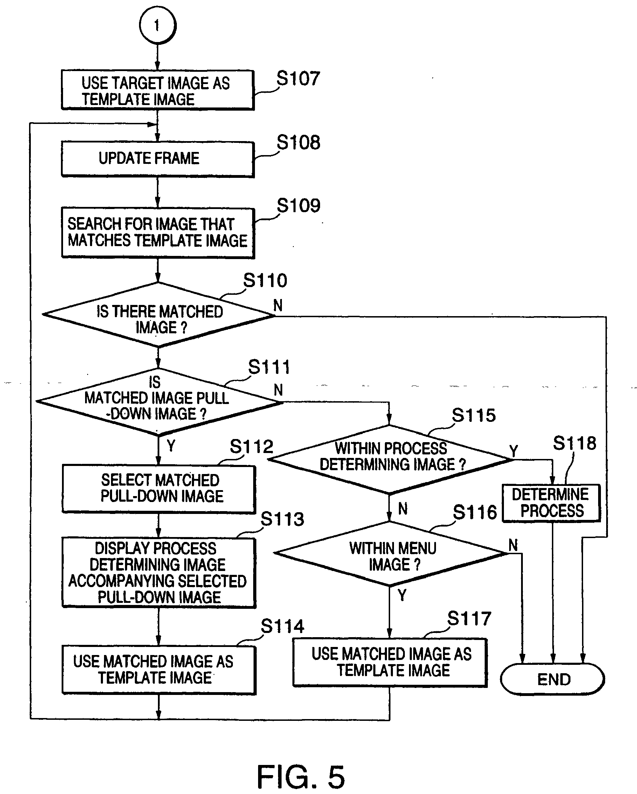

FIG. 4 and FIG. 5 show the processing procedure that is carried out by the image processor 2 to enable such operations.

First, with reference to FIG. 4, when the mirrored moving image is updated to that of the subsequent frame and when the combined image generated by the superimposing image generator 106 is updated accordingly (step S101), the difference value detector 107 compares image features of the mirrored moving image included in the combined images before and after the updating and calculates a difference value between them (step S102). The difference value which is calculated here is a value representing one movement of the operator's hand in the area in which the menu image is displayed. The difference values calculated are recorded in the main memory 11 and cumulatively added for a certain period of time (step S103). The reason why the difference values are cumulatively added is that the operator's intent on the operation instruction is sensed by the image processor 2 based on a plurality of movements of the operator's hand. If the operator's intent on the operation instruction can be determined according to the amount of a single movement of the hand, cumulative addition need not always be performed.

The difference value detector 107 sends the difference value (cumulative sum) to the object controller 105.

The object controller 105 determines the color of the menu image according to the difference value (cumulative sum) received from the difference value detector 107 (step S104). For example, two or more colors are provided for the menu image and the color is changed each time a movement of the hand is detected. It is also possible to change the color from transparent to semitransparent, opaque, and others. An actual difference value (cumulative sum) is compared with a predetermined threshold (step S105). When the cumulative sum is smaller than the threshold (step S105: N), the routine goes back to the step S101, assuming that it is not sufficient to determine that the "menu" of the menu screen has been selected.

When the cumulative sum is equal to or larger than the threshold (step S105: Y), the object controller 105 determines that the "menu" of the menu screen has been selected, displays a pull-down image, and reports it to the difference value detector 107 (step S106).

As apparent from the above, when the cumulative sum of the movement of the operator's hand detected in the area in which the menu image is displayed becomes equal to or larger than the threshold, selection of the "menu" of the menu image is sensed and the pull-down image is displayed. The color of the menu image varies according to the cumulative sum of the amount of movement of the hand, and therefore the operator can know a rough amount of an additional movement of the hand required to select the "menu".

Furthermore, since the display device 3 shows a mirrored moving image, the operator can perform the above-described operation in much the same way the operator looks in a mirror, providing a man-machine interface that is easy-to-operate for the operator.

Turning to FIG. 5, when it is determined that the "menu" on the menu screen has been selected, that is, the difference value (cumulative sum) becomes equal to or larger than the threshold, the difference value detector 107 stores the image of the operator's hand (target) at that time as a template image (step S107).

When the frame is updated and the menu image is replaced accordingly by the pull-down image in its subordinate layer to display a combined image (step S108), a search is started for a location of the image of the operator's hand in a new combined image. That is, the difference value detector 107 searches for an image that matches the template image from the combined image (step S109).

More specifically, it divides the combined image into areas of the same size as that of the template image, and searches for the image most resembling the template image from among the images in the divided areas. The image most resembling the template image in the area is, for example, when a sum total of absolute values (or squares) of differences between pixels of the images compared can be expressed as a distance, an image whose distance from the template image is the minimum.

When a matched image is found (step S110: Y), it is determined whether the matched image is a pull-down image (step S111). If the matched image is a pull-down image (step S111: Y), it is detected for which area of "select1", "select2" or "select3" the pull-down image is (step S112). The detected pull-down image is the pull-down image indicated and selected by the operator. Information on the selected pull-down image is reported from the difference value detector 107 to the object controller 105.

The object controller 105 reads a process determining image accompanying the selected pull-down image from the object data storage device 103 and generates an object image to which this process determining image is attached (step S113).

In this way, the display device 3 shows how the menus are selected one after another by the operator.

In the example in FIG. 7, the pull-down image of "select2" is selected from the menu image at the top layer and the process determining images ("process 21", "process 22", "process 23" and "process 24") accompanying the pull-down image of "select2" are displayed.

The template image is refreshed for each frame.

More specifically, the difference value detector 107 discards the template image used for the preceding frame and stores the above-described matched image (image of the operator's hand used to select the pull-down image) as a new template image (step S114). Then, the routine returns to the step S108 to specify one of the process determining images ("process 21", "process 22", "process 23" and "process 24") in the manner described above.

In step S111, when the matched image is outside the area of the pull-down image but is any one of the process determining images within the process determining image area (step S111: N, S115: Y), the process determining image is assumed to have been selected and the content of the process associated thereto is determined, that is, the program is enabled and the process using the menu image is finished (step S118).

When the matched image is outside the areas of the pull-down image and the process determining image but within the menu image area (step S111: N, S115: N, S116: Y), this means that the operator attempts to select another pull-down image, and therefore the routine discards the template image, stores the matched image as a new template image and returns to the step S108 (step S117).

In the step S110, when no matched image to be compared is found (step S110: N) or when a matched image is found but is an image outside the area of the menu image, the process with the menu image is terminated at that time (step S111: N, S115: N, S116: N).

By carrying out the processing using the menu image in the above procedure, the operator can easily select the process with a desired content while watching the mirrored moving image of himself or herself shown on the screen of the display device 3. Furthermore, the operator can enter instructions while checking his or her own behavior on the screen at any time, which prevents the operator from averting his/her eyes from the display device 3 as in the case of using an input device such as a keyboard.

### [Embodiment 2]

It is possible, by using the image processing system according to this embodiment, to establish an association between an object image and a program that is used by the main CPU 10 for carrying out an event that is to be subjected to image processing, so that the processing of the relevant event is executed according to an action of an operator within the mirrored moving image on the object image.

As an example of an object image that is to be superimposed on the mirrored moving image, this embodiment shows a case of using an image of a match and an image of a flame representing that the match ignites and bursts into flame.

As a premise, the image of the match which is the object image is associated beforehand with a program used to display an ignition animation on the display device 3, indicating that the match has ignited. Then, when the operator in the mirrored moving image behaves as if he/she struck the image of the match within the combined image, the ignition animation is designed to appear at a part of the image of the match corresponding to one end thereof that produces a flame. The image of the flame is displayed when the operator strikes the match.

The image of the flame can be generated using a technique of, for example, recursive texture drawing.

The "recursive texture drawing" refers to a drawing technique of reconstructing the texture of a given image from an image of an object rendered by texture mapping and carrying out texture mapping recursively. "Texture mapping" is a technique of rendering an image of an object to enhance the texture of the image by pasting bitmap data of the texture onto the surface of the object and can be implemented by also using the frame memory 15 as a texture memory. When carrying out such recursive texture drawing, gouraud shading is applied to a polygon on which the texture is drawn. In other words, the gouraud shading calculates the brightness of each vertex of the polygon and interpolates between the vertices to get the brightness inside the polygon (this technique is called "gouraud texture mapping").

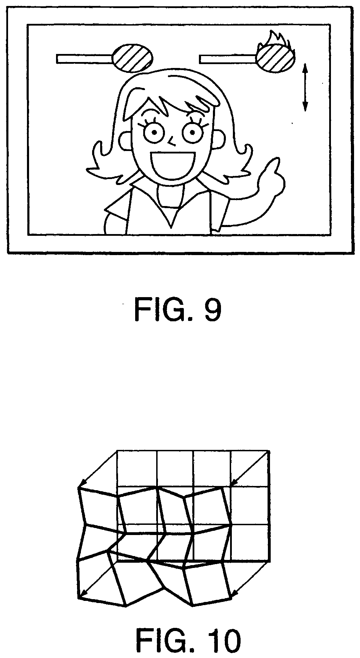

To provide the flame image, the positions of vertices within the mesh which forms the flame image are moved using random numbers as shown in FIG. 10 and the positions of new vertices are determined. The brightness of the vertices is also determined based on the random numbers. The positions of the vertices and brightness of the vertices are determined every time the frame is updated. Each unit of the mesh which forms the flame image is a polygon.

On each polygon, the image that becomes the basis of the flame drawn in the frame memory 15 is formed through the above-described recursive texture drawing and the above-described gouraud shading is applied based on the brightness of each vertex of the polygon. This makes it possible to produce a rising air above the flame, shimmering, and dimming of the flame in a more realistic way.

It is assumed that the image processor 2 produces a combined image as shown in FIG. 9, with the image of a match superimposed on the mirrored moving image of the operator on the display device 3. Here, it is assumed that the target is the operator's hand. By detecting the amount of movement of the hand in the area in which the image of the match is displayed, the program associated to the image of the match is executed and the ignition animation is displayed on the display device 3.

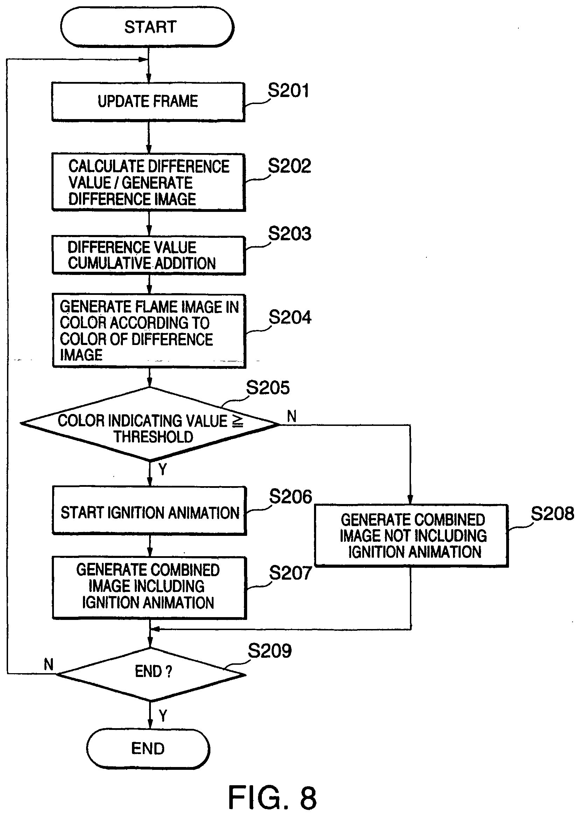

FIG. 8 shows the processing procedure carried out by the image processor 2 to realize such an operation.

When the mirrored moving image is updated to that of the subsequent frame and when the combined image generated by the superimposing image generator 106 is updated accordingly (step S301), the difference value detector 107 compares image features of the mirrored moving images included in the combined images before and after the updating, calculates a difference value between the images at the ignition section of the image of the match and generates a difference image of the ignition section of the image of the match (step S202). The difference value which is calculated here is a value that quantitatively represents the movement of the hand around the ignition section of the image of the match. The difference image generated is an image made up of the images of the hand before and after moving the hand around the ignition section of the image of the match.

The difference values calculated are recorded in the main memory 11 and cumulatively added for a certain period of time (step S203).

The difference value detector 107 sends the cumulative sum, which is the cumulative sum of the difference images and difference values, to the object controller 105.

The object controller 105 determines the color of the difference image according to the cumulative sum received from the difference value detector 107 and generates a flame image based on this difference image (step S204). The flame image is generated, for example, by dividing the difference image into meshes and using the aforementioned recursive texture based on these meshes. The color of the flame image is determined according to the color of the difference image. The flame image generated is superimposed on the ignition section of the image of the match.

In this way, the flame image with the color according to the amount of movement of the hand added is displayed in the area showing the movement of the hand around the ignition section of the image of the match.

Determining the color of the flame image according to the cumulative sum of difference values makes it possible, for example, to express how the color of the flame image displayed in the ignition section of the match gradually changes according to the amount of movement of the hand.

Then, the object controller 105 compares the value indicating the color of the flame image with a predetermined threshold (step S205). For example, if the color of the flame image is represented by R, G and B color values, the sum of the values may be used.

When the value indicating the color is equal to or greater than the threshold (step S205: Y), the object controller 105 determines to run the program that displays the ignition animation indicating that the match has ignited (step S206).

That is, whether or not to start the ignition animation is determined according to the color of the flame image. For example, when the color of the flame image changes from red to yellow according to the amount of movement of the hand, the ignition animation starts when the flame images turns yellow. The operator can know a rough amount of additional movement of the hand required to start the ignition animation.

The superimposing image generator 106 generates a combined image by superimposing an image superimposing the ignition animation on the object image including the match image and flame image, on the mirrored moving image obtained by the camcoder 1 (step S207). The ignition animation is displayed in the ignition section of the match image.

When the value indicating the color is smaller than the threshold (step S205: N), the object controller 105 sends the object image superimposing the flame image on the match image, to the superimposing image generator 106. The superimposing image generator 106 generates a combined image by superimposing this object image on the mirrored moving image obtained by the camcoder 1 (step S208).

Then, if, for example, an instruction for terminating the processing is received from the operating device 35, the processing is terminated (step S209: Y). If no instruction for terminating the processing is received (step S209: N), the routine returns to the step S201 and the display controller 108 displays the combined image generated in the step S207 or the step S208 on the display device 3.

As apparent from the above, the system executes the process of determining whether to execute the program for displaying the ignition animation that is associated with the match image, according to how much the operator moves his/her hand around the ignition section of the match image.

Since the operator can perform operations for executing various events while watching the mirrored moving image of himself or herself, it is possible to perform input operations for executing processes more easily than conventional operations that use input devices such as a keyboard and mouse.

### [Embodiment 3]

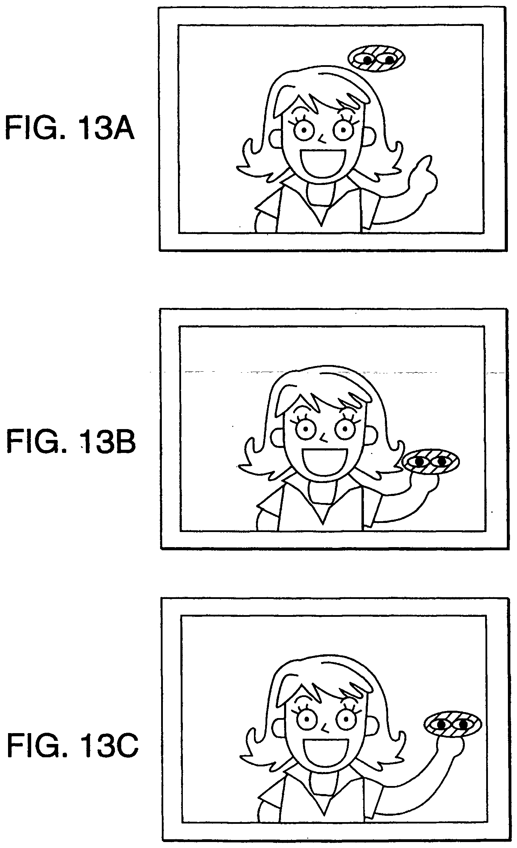

Another embodiment is described. As a premise, it is assumed that the image processor 2 produces on the display device 3 a combined image with a cursor (pointer) image, which is an example of an object image, superimposed on the mirrored moving image of the operator, as shown in FIG. 13(a). It is also assumed that a plurality of targets such as hands, eyes, and mouth of an operator are included in the mirrored moving image.

Here, description is made in conjunction with a case where the movement of the operator's hand is emphasized among the plurality of targets, and the cursor image is followed by this movement of the hand.

As shown in FIG. 13(a), the cursor image is an image like a face with an emphasis put on the eyes, which allows the eyes to be oriented toward the target. Furthermore, the cursor image moves following the movement of the target. More specifically, when the cursor image is distant from the target, the cursor image moves toward the target. When the cursor image catches the target, the cursor image follows the movement of the target.

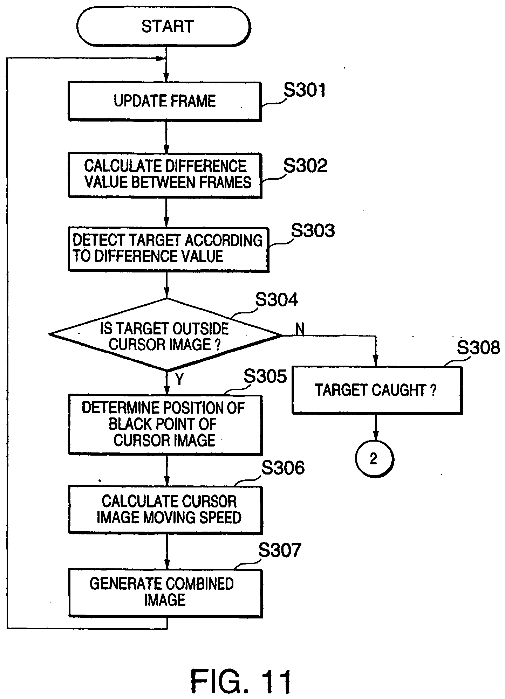

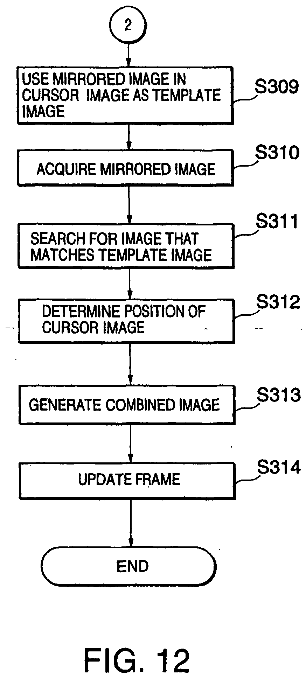

FIG. 11 and FIG. 12 show the processing procedure that is carried out by the image processor 2 to enable such operations.

According to FIG. 11, when the mirrored moving image is updated to that of the subsequent frame and when the combined image generated by the superimposing image generator 106 is updated accordingly (step S301), the difference value detector 107 compares image features of the mirrored moving image included in the combined images before and after the updating and calculates a difference value between them (step S302). The difference value which is calculated here is a value quantifying the movements of the hands, eyes, mouth, etc. of the operator, which become a candidate of the target in the mirrored moving image.

The difference value detector 107 sends the difference value of each target to the object controller 105.

The object controller 105 detects one target based on the difference value of each target sent from the difference value detector 107 (step S303). For example, it detects a target whose difference value reaches the maximum. In this example, it is assumed that the operator's hand is detected as the target.

Upon detection of the target, the object controller 105 determines how the cursor image is displayed according to the target.

First, the object controller 105 determines whether the target in the combined image updated in the step S310 is outside the cursor image (step S304). If the target is within the cursor image (step S304: N), the object controller 105 determines that the cursor image has caught the target (step S308).

If the target is outside the cursor image (step S304: Y), the object controller 105 determines that the cursor image has not caught the target, and carries out processing for determining how the cursor image is displayed. That is, the object controller 105 generates a cursor image so that the eyes in the cursor image are oriented toward the target.

Furthermore, it determines the speed at which the cursor image moves toward the target according to the distance between the cursor image and the target (step S306). This speed may be higher as the cursor image moves farther from the target. This makes it possible to obtain an image in which the cursor moves toward the target faster as the cursor image stays farther from the target.

The superimposing image generator 106 superimposes such a cursor image on the mirrored moving image of the subsequent frame to generate a combined image as shown in FIG. 13(a) (step S307). Then, the routine goes back to the step S301 and performs the same operation for the combined image generated.

The routine carries out the operations of the step S301 to S307 until the cursor image catches the target, that is, until it is determined in the step S304 that the target is within the cursor image.

Such operations can provide an image as shown in FIG. 13(a) in which the eyes in the cursor image are oriented toward the target (hand) and the cursor image follows the target.

Then, turning to FIG. 12, when the cursor image catches the target, the difference value detector 107 holds the image of the target at that time as a template image (step S309). For example, it holds the section of the mirrored moving image that overlaps with the cursor image as the template image.

Then, the difference value detector 107 acquires the mirrored moving image of the subsequent frame from the image inverter 102 (step S310). The difference value detector 107 searches for the position of an image that matches the stored template image from among the acquired mirrored moving image (step S311).

More specifically, it divides the acquired mirrored moving image into areas of the same size as that of the template image, and searches for the image in the area most resembling the template image from among the images in the divided areas. Upon detecting the matched image as a result of the search, it reports the position of the detected image to the object controller 105.

The object controller 105 determines the position reported from the difference value detector 107 as the position of the cursor image for the subsequent combined image (step S312).

The superimposing image generator 106 superimposes the cursor image at the position determined in the step S312 by the object controller 105 on the same mirrored moving image as the mirrored moving image acquired in the step S310 by the difference value detector 107, and generates a combined image as shown in FIG. 13(b) (step S313). Then, the frame is updated and the display controller 108 displays the combined image generated on the display device 3 (step S314).

Repeating the above-described operations after the target is caught (step S309 to step S314) provides an image in which the cursor image follows the target. More specifically, when the cursor image catches the target (hand) as shown in FIG. 13(b), the cursor image is displayed thereafter at the destination of the target wherever the target moves. Even when the operator extends the hand as shown in FIG. 13(b) to FIG. 13(c), the cursor image is displayed at the tip of the extended hand of the operator together with the movement of the hand recognized as the target.

Using the cursor image allows the operator to find at a glance which part of his or her body is functioning as the cursor when selecting a process from the menu image as shown in Embodiment 1, for example.

Furthermore, if, for example, the trace of the movement of the cursor image is set to be kept and displayed, it is possible to show the trace of the movement of the target on the display device 3. This makes it possible to show, for example, pictures and characters, etc. drawn in the space on the display device 3.

As apparent from the foregoing description, when the operator needs to enter data or others, the present invention allows the operator to enter or select the data easily using the mirrored moving image while watching the combined image displayed on the display device, and can thereby provide a user-friendly input interface without the need to get accustomed thereto.

Various embodiments, changes and modifications may be made without departing from the broad spirit and scope of the present invention. The above-described embodiments are intended to be illustrative and do not limit the scope of the present invention. The scope of the present invention is defined by the appended claims rather than the embodiments thereof. Various embodiments which fall within the scope of the appended claims and equivalents thereto are contemplated within the scope of the present invention.

## Claims

1. An image processor comprising:
image inverting means (102) configured for performing a right/left inversion on a moving image captured by a camcorder (1) to generate a mirrored moving image, wherein the moving image includes a part of a moving subject as a target;
detecting means (107) adapted for comparing image features between a current mirrored moving image and an immediately preceding mirrored moving image, and deriving a difference value of image features quantatively representing the changes of the movement components of said target;
image generating means (105) configured for generating an object image representing a predetermined object associated with a predetermined process; and
controlling means (106) configured for displaying a combined image combining the object image generated by the image generating means (105) with said mirrored moving image on a predetermined display device (3),
wherein said detecting means (107) is further configured to calculate a cumulative value by cumulatively adding the difference values, which are derived in the region of the object image of said combined image, for a certain period of time;
wherein said image generating means (105) is further configured to determine the color of said object image according to said cumulative value detected by said detecting means (107); and
wherein said image generating means (105) is further configured to execute said predetermined process associated with the object image when said cumulative value exceeds a predetermined value or when a value indicating the color of said object image exceeds a predetermined value.

2. The image processor according to claim 1, further comprising a semiconductor device on which said image inverting means (102), said detecting means (107), said image generating means (105), and said controlling means (106) are formed.

3. An image processing method comprising the steps of:
capturing a moving image including a part of a moving subject as a target;
performing a right/left inversion on the moving image to generate a mirrored moving image;
comparing (S102, S202) image features between a current mirrored moving image and an immediately preceding mirrored moving image, and deriving (S102, S202) a difference value of image features quantatively representing the changes of the movement components of said target;
generating an object image representing a predetermined object associated with a predetermined process;
displaying (S106, S207) a combined image combining the object image generated with said mirrored moving image;
calculating (S103, S203) a cumulative value by cumulatively adding the difference values, which are derived in the region of the object image of said combined image, for a certain period of time;
determining (S104, S204) the color of said object image according to said calculated cumulative value; and
executing (S106, S206) said predetermined process associated with the object image when said cumulative value exceeds (S105) a predetermined value or when a value indicating the color of said object image exceeds (S205) a predetermined value.

4. A computer program for causing a computer connected to a predetermined display device to execute the method of claim 3.

5. A computer-readable recording medium that records the computer program according to claim 4.

## Patentansprüche

1. Bildprozessor, der Folgendes umfasst:
ein Bildinvertierungsmittel (102), das dazu konfiguriert ist, eine Rechts-links-Inversion auf ein Bewegtbild, das von einem Camcorder (1) erfasst wird, anzuwenden, um ein gespiegeltes Bewegtbild zu erzeugen, wobei das Bewegtbild einen Teil eines sich bewegenden Subjekts als ein Ziel beinhaltet;
ein Detektionsmittel (107), das dazu ausgelegt ist, Bildmerkmale zwischen einem gegenwärtigen gespiegelten Bewegtbild und einem unmittelbar vorhergehenden gespiegelten Bewegtbild zu vergleichen und einen Differenzwert von Bildmerkmalen, der die Änderungen der Bewegungskomponenten des Ziels quantitativ repräsentiert, abzuleiten;
ein Bilderzeugungsmittel (105), das dazu konfiguriert ist, ein Objektbild zu erzeugen, das ein vorbestimmtes, mit einem vorbestimmten Prozess verknüpftes Objekt repräsentiert; und
ein Steuermittel (106), das dazu konfiguriert ist, ein kombiniertes Bild, das das von dem Bilderzeugungsmittel (105) erzeugte Objektbild mit dem gespiegelten Bewegtbild kombiniert, auf einer vorbestimmten Anzeigevorrichtung (3) anzuzeigen;
wobei das Detektionsmittel (107) ferner dazu konfiguriert ist, einen kumulativen Wert durch kumulatives Addieren der Differenzwerte, die in dem Gebiet des Objektbildes des kombinierten Bildes abgeleitet werden, für eine bestimmte Zeitdauer zu berechnen;
wobei das Bilderzeugungsmittel (105) ferner dazu konfiguriert ist, die Farbe des Objektbildes gemäß dem kumulativen Wert, der von dem Detektionsmittel (107) detektiert wird, zu bestimmen; und
wobei das Bilderzeugungsmittel (105) ferner dazu konfiguriert ist, den vorbestimmten Prozess, der mit dem Objektbild verknüpft ist, auszuführen, wenn der kumulative Wert einen vorbestimmten Wert überschreitet oder wenn ein Wert, der die Farbe des Objektbildes anzeigt, einen vorbestimmten Wert überschreitet.

2. Bildprozessor nach Anspruch 1, der ferner eine Halbleitervorrichtung umfasst, auf der das Bildinvertierungsmittel (102), das Detektionsmittel (107), das Bilderzeugungsmittel (105) und das Steuermittel (106) gebildet sind.

3. Bildverarbeitungsverfahren, das die folgenden Schritte umfasst:
Erfassen eines Bewegtbildes einschließlich eines Teils eines sich bewegenden Subjekts als Ziel;
Anwenden einer Rechts-links-Inversion auf das Bewegtbild, um ein gespiegeltes Bewegtbild zu erzeugen; Vergleichen (S102, S202) von Bildmerkmalen zwischen einem gegenwärtigen gespiegelten Bewegtbild und einem unmittelbar vorhergehenden gespiegelten Bewegtbild und Ableiten (S102, S202) eines Differenzwertes von Bildmerkmalen, der die Änderungen der Bewegungskomponenten des Ziels quantitativ repräsentiert;
Erzeugen eines Objektbildes, das ein vorbestimmtes, mit einem vorbestimmten Prozess verknüpftes Objekt repräsentiert;
Anzeigen (S106, S207) eines kombinierten Bildes, das das erzeugte Objektbild mit dem gespiegelten Bewegtbild kombiniert;
Berechnen (S103, S203) eines kumulativen Wertes durch kumulatives Addieren der Differenzwerte, die in dem Gebiet des Objektbildes des kombinierten Bildes abgeleitet werden, für eine bestimmte Zeitdauer;
Bestimmen (S104, S204) der Farbe des Objektbildes gemäß dem berechneten kumulativen Wert; und
Ausführen (S106, S206) des vorbestimmten Prozesses, der mit dem Objektbild verknüpft ist, wenn der kumulative Wert einen vorbestimmten Wert überschreitet (S105) oder wenn ein Wert, der die Farbe des Objektbildes anzeigt, einen vorbestimmten Wert überschreitet (S205).

4. Computerprogramm zum Veranlassen, dass ein Computer, der mit einer vorbestimmten Anzeigevorrichtung verbunden ist, das Verfahren aus Anspruch 3 ausführt.

5. Computerlesbares Aufzeichnungsmedium, das das Computerprogramm nach Anspruch 4 aufzeichnet.

## Revendications

1. Processeur d'image comprenant :
un moyen d'inversion d'image (102) configuré pour effectuer une inversion droite/gauche sur une image animée capturée par un caméscope (1) pour générer une image animée miroir, l'image animée comportant une partie d'un sujet animé en tant que cible ;
un moyen de détection (107) adapté pour comparer des caractéristiques d'image entre une image animée miroir courante et une image animée miroir immédiatement précédente, et déduire une valeur de différence de caractéristiques d'image représentant quantitativement les changements des composantes de mouvement de ladite cible ;
un moyen de génération d'image (105) configuré pour générer une image d'objet représentant un objet prédéterminé associé à un processus prédéterminé ; et
un moyen de contrôle (106) configuré pour afficher une image combinée en combinant l'image d'objet générée par le moyen de génération d'image (105) avec ladite image animée miroir sur un dispositif d'affichage prédéterminé (3),
ledit moyen de détection (107) étant en outre configuré pour calculer une valeur cumulée en ajoutant de façon cumulative les valeurs de différence, qui sont déduites dans la région de l'image d'objet de ladite image combinée, pendant un certain laps de temps ;
ledit moyen de génération d'image (105) étant en outre configuré pour déterminer la couleur de ladite image d'objet en fonction de ladite valeur cumulée détectée par ledit moyen de détection (107) ; et
ledit moyen de génération d'image (105) étant en outre configuré pour exécuter ledit processus prédéterminé associé à l'image d'objet quand ladite valeur cumulée dépasse une valeur prédéterminée ou quand une valeur indiquant la couleur de ladite image d'objet dépasse une valeur prédéterminée.

2. Processeur d'image selon la revendication 1, comprenant en outre un dispositif à semi-conducteurs sur lequel ledit moyen d'inversion d'image (102), ledit moyen de détection (107), ledit moyen de génération d'image (105) et ledit moyen de contrôle (106) sont formés.

3. Procédé de traitement d'image comprenant les étapes consistant à :
capturer une image animée comportant une partie d'un sujet animé en tant que cible ;
effectuer une inversion droite/gauche sur l'image animée pour générer une image animée miroir ;
comparer (S102, S202) des caractéristiques d'image entre une image animée miroir courante et une image animée miroir immédiatement précédente, et déduire (S102, S202) une valeur de différence de caractéristiques d'image représentant quantitativement les changements des composantes de mouvement de ladite cible ;
générer une image d'objet représentant un objet prédéterminé associé à un processus prédéterminé ;
afficher (S106, S207) une image combinée en combinant l'image d'objet générée avec ladite image animée miroir ;
calculer (S103, S203) une valeur cumulée en ajoutant de façon cumulative les valeurs de différence, qui sont déduites dans la région de l'image d'objet de ladite image combinée, pendant un certain laps de temps ;
déterminer (S104, S204) la couleur de ladite image d'objet en fonction de ladite valeur cumulée calculée ; et
exécuter (S106, S206) ledit processus prédéterminé associé à l'image d'objet quand ladite valeur cumulée dépasse (S105) une valeur prédéterminée ou quand une valeur indiquant la couleur de ladite image d'objet dépasse (S205) une valeur prédéterminée.

4. Programme informatique destiné à amener un ordinateur connecté à un dispositif d'affichage prédéterminé à exécuter le procédé de la revendication 3.

5. Support d'enregistrement lisible par ordinateur qui enregistre le programme informatique selon la revendication 4.
